Europäisches Patentamt

European Patent Office

Office européen des brevets

(19)

(11) Publication number: **0 093 496**
A1

# EUROPEAN PATENT APPLICATION

(12)

(21) Application number: 83301553.0

(22) Date of filing: 21.03.83

(51) Int. Cl.³: **G 05 B 19/417**

(30) Priority: 30.04.82 US 373441

(43) Date of publication of application:
09.11.83 Bulletin 83/45

(84) Designated Contracting States:
AT BE CH DE FR GB IT LI LU NL SE

(71) Applicant: Pemberton Research & Development, Inc.
P.O. Box 3226
Lewiston Michigan 49756(US)

(72) Inventor: Vogt, Norman H.
P.O. Box 3226
Lewiston Michigan 49756(US)

(74) Representative: Pacitti, Pierpaolo A.M.E. et al,
Ian G. Murgitroyd and Company 49 Bath Street
Glasgow G2 2DL(GB)

(54) Method and apparatus for processing similar workpieces of varying shape, points of contour and dimension.

(57) Workpieces of varying dimensions and varying points of common contour or shape are loaded on a transfer shuttle at the receiving station and there located on a projected line of light at a common reference point from which the workpieces vary; the shuttle moves the first located workpieces to the second station where partial processing occurs. The receiving station is reloaded with workpieces and the workpieces located; the shuttle moves the partially processed workpieces from the second station to the third station and moves the second reloaded and located workpieces to the second station; at the third station the workpieces are further processed; in moving between stations the workpieces are also processed; at the second and following stations the workpieces are scanned by video cameras producing a measured dimensional and point of contour and shape image relative to the common point; the camera image is video processed and fed to image processing; the processed image is fed to systems decision processing; and the output is fed to servos which locate and operate tools relative to the workpieces at the second and following stations in response to signals indicative of the dimension, points of contour and shape of the individual workpieces.

./...

*Fig-2*

This invention relates to a method and apparatus for processing similar workpieces of varying shape, points of contour and dimension.

## BACKGROUND OF THE PRESENT INVENTION

The automated production lines of the prior art handle workpieces which are the same shape, contour and dimension. Edges, holes, lugs, keys, depressions, detents, etc., are on the workpieces to provide interlocking positioning and/or gripping means so that identical workpieces may be identically located at work stations. The lines are equipped with sensors which reject workpieces from the line which are not the same shape and dimension, and which vary in position and grip means. In other words, the prior art does not tolerate varying shape, contour and dimension whereas the present invention provides facility for handling workpieces of varying shape, contour and dimension.

## SUMMARY OF THE PRESENT INVENTION

An elongated frame has opposite sides and multiple stations such as three. Spaced and paired stubs are welded on the top of the sides of the frame. Drop-loop straps lie between paired stubs forming workpiece receiving stirrups at each station after the first station. A platen lies within the opposite sides of the frame below the stubs and all stations. Means are provided to raise and lower the platen relative to the stirrups. A shuttle is slidably located on the platen. The shuttle as shown extends between two stations of the frame. Upstanding

paired legs are welded on the shuttle of such length as to be located with their upper ends well above the stubs on the frame when raised by the platen. The legs lie inwardly of the stubs to by-pass the stubs. Drop-loop straps lie between the tops of paired legs forming slings. The platen raises and lowers the shuttle. Means are provided to move the shuttle bi-directionally lengthwise on the platen relative to the stations of the frame in the raised and lowered positions of the platen.

Workpieces are loaded in the slings of the shuttle at station I. Upward movement of the shuttle by the platen raises the bottom of the slings above the tops of the stubs and stirrups. Outward lengthwise movement of the shuttle moves the slings and workpieces over the stirrups of the frame to which they are indexed. Downward movement of the shuttle moves the workpieces into contact with the stirrups at station II which now supports the workpieces. Further downward movement of the shuttle clears the legs and slings of the stubs, stirrups and workpieces. The shuttle is then retracted to its initial position where it is reloaded with workpieces. During the retraction and reloading, work is performed on the workpieces at station II. There are now workpieces at stations I and II but none at station III.

The shuttle is now raised and lifts the worked-on workpieces at station II above the stirrups and stubs and lifts the reloaded workpieces at station I. The shuttle is moved

lengthwise to the positions of stations II and III. The shuttle is then lowered depositing the worked-on workpieces from station II in the stirrups of station III and the reloaded workpieces from station I in the stirrups of station II. During passage between stations II and III the workpieces from station II have work performed on them. The shuttle is now lowered by the platen and returned to the reloading station and reloaded. During the return and reload, work on the workpieces is performed at stations II and III and the processed workpieces at station III ejected from the stirrups at station III but retained at station II. The operation described is continuous dependent only upon the workpieces being loaded and located at station I. Shutes and other transfer means receive the off-fall from the workpieces and convey them from the apparatus.

The frame may be any length and have any number of stations with the shuttle being extended to include sufficient stations to serve all the stations of the frame. Several frames and shuttles may be used, and transfers used between them. More than one shuttle may be used in one frame.

(The Controls)

A lamp at station I projects a line of light downwardly at a selected point to indicate the proper position of the workpiece. The loader aligns each workpiece on the slings at station I so that the common reference point of the workpiece lies on the projected line of light and presses a button which activates the shuttle to move the workpieces to station II at the initiation of processing which also activates all stations.

One or more cameras are positioned at a station. A camera takes a measured image of the workpiece and feeds the dimensions, contours and shape of the workpiece relative to the reference point to video processing components where the image is converted to data which are fed to image processing. System decision processing components receive the processed data and in conjunction with memories, stored programs and software programs produce signals that indicate the portions of the workpiece upon which the tools will work, to what extent, and to one or more actions by the tools. These signals are fed to servos which control the movement of the tools relative to the workpieces. As shown at station II, two cameras and two servos lie on either side of station II for performing work on both ends of the workpiece at the same time. In the meantime, the shuttle has relocated to station I and has been reloaded with workpieces.

The operator presses the button and the shuttle moves the workpieces from station II to station III and the newly loaded workpieces to station II. During the passage of the workpieces from stationII to station III they pass by a tool which performs further work prior to their being deposited at station III. Work proceeds at stationII as above set forth.

A camera at station III scans the workpieces received from station II and feeds the measured image to the control system previously described and the servo at station III activates and controls the tool to perform the desired work at station III similar to station II. The finished or semi-finished workpieces are shunted out of station III clearing it for the next workpieces to be received from station II.

The method and apparatus, their function and operation, and the unforeseen result of the operation of the invention will be more clearly understood from the later detailed description taken in conjunction with the attached schematic drawings now described.

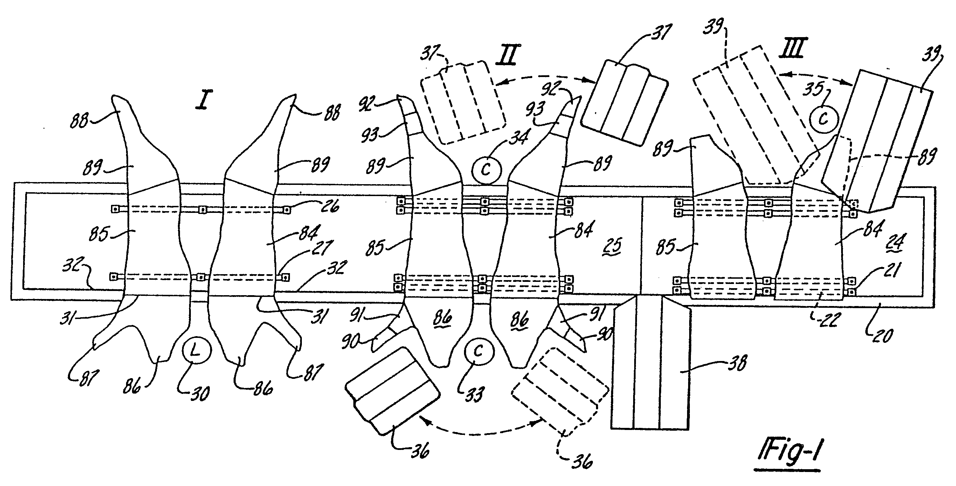

Figure 1 is a plan diagrammatic view of sections I, II and III showing the frame, the stubs on the frame, the stirrups between paired stubs, the shuttle in stations I and II, legs on the shuttle inboard of the stubs, slings between the paired legs, the platen portion in station III outward of the shuttle, workpiece animal carcasses on the stirrups and slings at stages of work, meat saws at stations II and III with their various movements and positions indicated in broken lines, a fixed meat saw between stations II and III, indicating lamp and the line-up light at station I, the two cameras at station II, and the camera at station III.

Figure 2 is a side-elevational diagrammatic view of the apparatus as seen from the bottom of Fig.1, showing the apparatus as described relative to Fig.1 and additionally showing a cylinder for moving the shuttle, cylinders for raising the platen and shuttle and workpieces thereon, supports for the saws, and servos for moving the supports on signal.

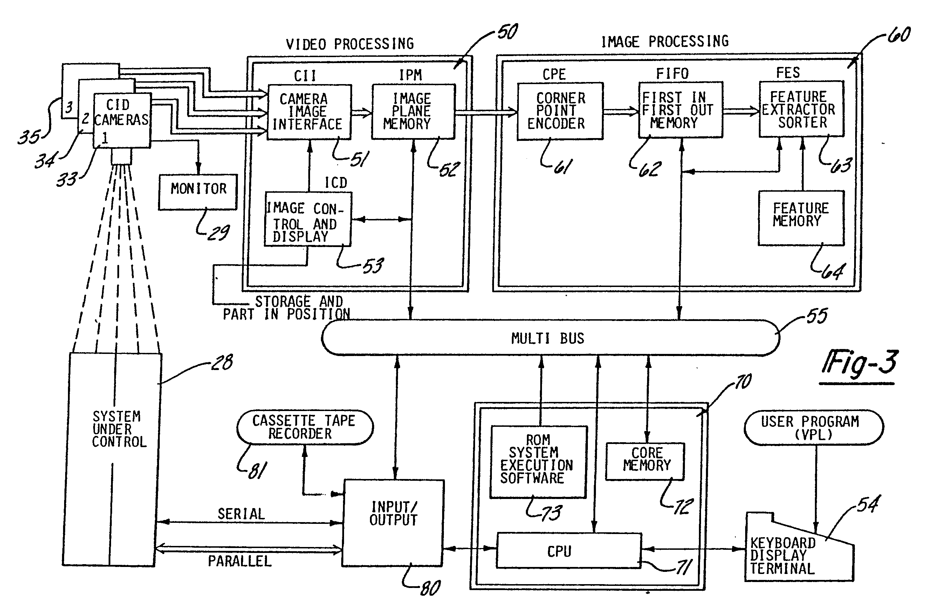

Figure 3 is a diagrammatic view of the system under control, cameras scanning the system producing measured images; video processing means receiving the measured images; image processing means receiving the output of the video processing; a multi bus receiving output from video and image processing; systems decision processing feeding output to the multi bus; input-output means bi-directionally connected to the multi bus, to decision processing,and the system under control; systems processing feeding to the multi bus and to a display terminal for user program introduction, and a cassette recorder communicating with the input-output means.

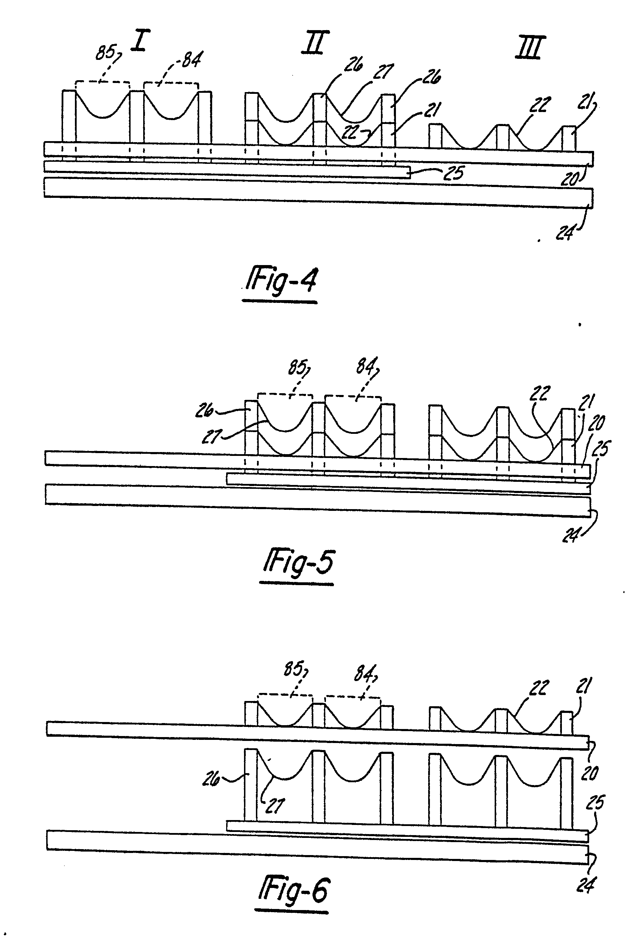

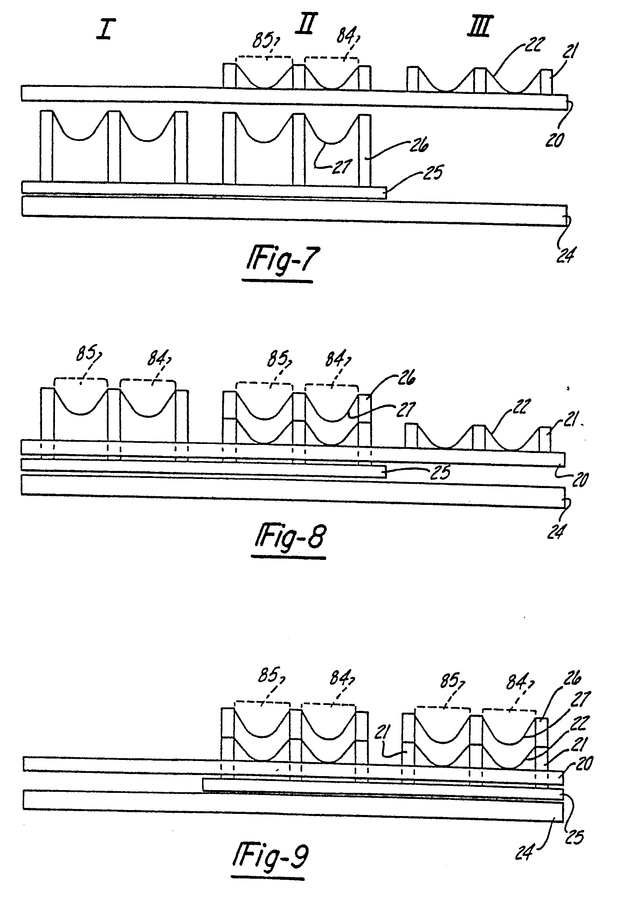

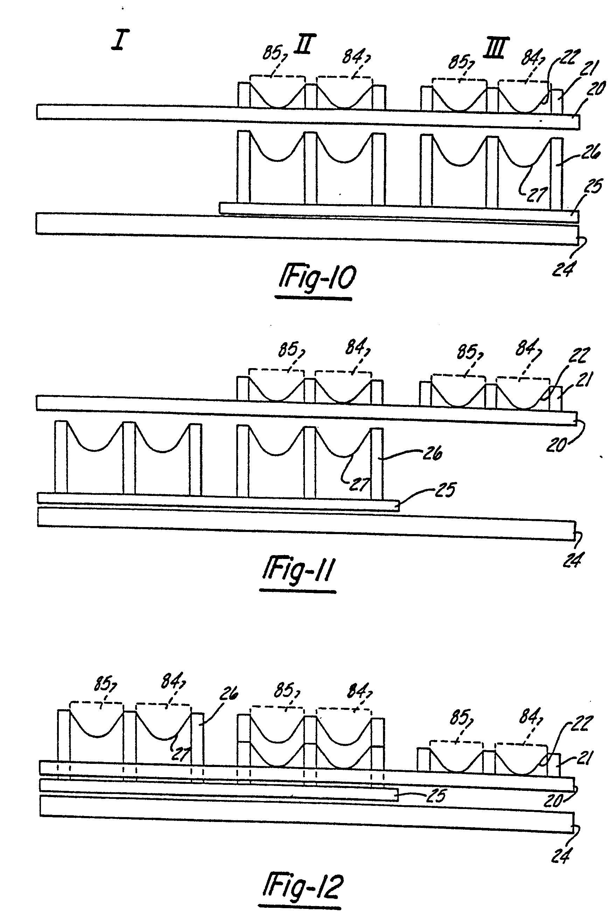

Figure 4 and following Figures 5 to 12, are partial side elevational diagrammatic progressive showings of the apparatus of Figures 1 and 2 indicating the frame, stubs and stirrups; the platen; the shuttle, legs and slings; and with Figure 4 showing the platen and shuttle raised with workpieces in the slings at station I.

Figure 5 shows the raised shuttle moved to stations II and III.

Figure 6 shows the shuttle lowered in stations II and III with the workpieces deposited on the stirrups of station II.

Figure 7 shows the shuttle brought back to stations I and II in the lowered position.

Figure 8 shows the shuttle raised by the platen elevating the workpiece at station I and lifting the workpieces off the stirrups in station II.

Figure 9 snows the shuttle moved to stations II and III in the raised position.

Figure 10 shows the shuttle lowered in stations II and III with the reloaded workpieces deposited in station II and the worked on workpieces deposited at station III.

Figure 11 shows the shuttle in lowered position retracted to station I and workpieces left in stations II and III; and

Figure 12 shows the shuttle raised carrying second reloaded workpieces on the slings in station I, worked on workpieces from station II on the slings and worked on workpieces in the stirrups at station III just prior to being ejected to clear station III, so that the shuttle can repeat motions shown in Figures 8 to 12.

DETAILED DESCRIPTION OF THE ILLUSTRATED EMBODIMENTS

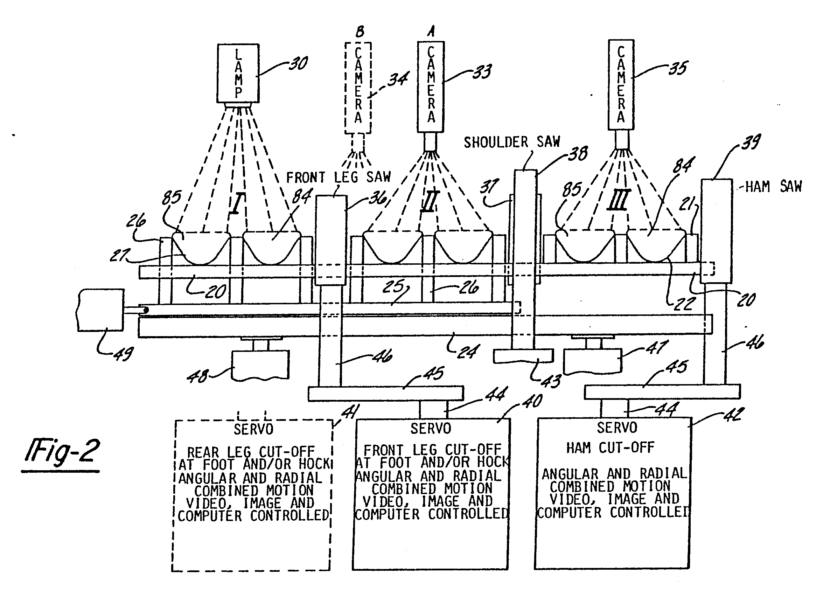

Referring now to the drawings where like reference numerals refer to like and corresponding parts throughout the several views, the method and apparatus of the invention for processing workpieces of varying contour, shape and dimension in sequential operations comprise a fram 20 extending lengthwise a distance to include a desired plurality of work stations such as stations I, II and III, Figures 1 and 2. Upstandings stubs 21 are welded on the frame 20 and are paired with one another. Stirrups 22 hang between paired stubs 21 for receiving and supporting workpieces or objects 84 and 85. A key point 32 is established for the system such as a line on the frame 20.

7

A platen 24 lies in the frame 20. A shuttle 25 rests on the platen 24. Paired legs 26 extend upwardly on the shuttle 25. Slings 27 hang down between paired legs 26 for receiving and supporting workpieces 84, 85 at station I and transferring workpieces 84, 85 to and between stations II and III. A lamp 30 at station I projects a line of light 31 on the key point 32 and on the workpieces 84, 85 in station I. The attendent aligns the common reference point 32 of the workpieces 84, 85 under the line of light 31 which properly locates the workpieces 84, 85 relative to the key point 32. Cameras 33, 34 and 35 at stations II and III scan the workpieces 84, 85. A monitor 29 co-acts with the cameras 33, 34 and 35 relative to the system under control 28, Fig. 3.

Tools 36, 37, 38 and 39 are located in stations II and III. Servos 40, 41 and 42 lie in stations II and III to move and position the tools 36, 37 and 39 respectively. Tool 38 is fixed on a base 43. Each servo 40, 41 and 42 has angularly and radially moving supports 44, 45 and 46 respectively for compound universal positioning of the tools 36, 37 and 39. The servos 40, 41 and 42 are video, image and computer controlled. Hydraulic cylinders 47 and 48 raise and lower the platen 24 and the shuttle 25 and workpieces 84, 85. A hydraulic cylinder 49 advances and retracts the shuttle 25 between stations I, II and III.

The cameras 33, 34 and 35, Fig. 3, are charge injection devices (CID) and generate the visual scene-data from which macro-scene characteristics or features are extracted, processed

and analyzed according to a pre-established program. The cameras
33, 34 and 35 contain a sensor which is a mosaic of about 250 by
250 solid state light sensitive picture elements (pixels)
arranged in columns and rows which are electronically scanned to
generate a television-like image. This results in a spatially
stable precise geometry which gives the effect of superimposing a
fixed, repeatable measurement grid over objects in the camera
field of view. The camera images are fed to video input
processing (VIP).

VIP 50 has a camera image interface 51 (CII), an image
plane memory (IPM) 52, and image control and display (ICD) 53.
These elements process pixel based data steering, formating,
thresholding, multiflexing and storage. Incoming 8-bit digetized
video from each camera is thresholded into a 1-bit binary black
and white signal for further processing, they may be software
controlled, and analog camera data may be presented on a T.V.
monitor 54. The image plane memory (IPM) 52 acts as a data rate
converter allowing access by the image data processing function
to occur at rates varying from camera video rates. VIP feeds its
output to multi bus 55. VIP also feeds its output to image data
processing (IDP) 60.

IDP 60 has a corner point encoder (CPE) 61, first
in-first out memory (FIFO) 62, a feature extractor sorter (FES)
63 and a feature memory 64. CPE produces signals equivalent to
the dimensions, contours and shape of each workpiece 84, 85 and feeds the signals to FIFO.  FES extracts the dimensional features of each workpiece 84, 85 and sorts them.  A feature memory 64 retains the sorted images throughout the travel of workpieces 84, 85 at stations II and III and any downstream stations. Downstream stations are afforded by lengthening the frame 20, the platen 24 and the shuttle 25 with cameras and servos attending the downstream stations.

System Decision Processing 70 includes CPU 71, associated core memory modules 72, and ROM system execution software elements 73, all of which are connected to the multi bus 55.  CPU 71 is connected to the keyboard display terminal 54 or a T.V. monotor 54.

An input-output module 80 is connected to the multi bus 55, between the system under control 28 and CPU 71, and to a cassette tape recorder 81.

The illustrated workpieces are split hog carcasses 84 and 85 which are located at station I on the line of light 31 on the point common to all the carcasses 84 and 85 (I.E.) the juncture between the second and third ribs.  The head has been removed prior to splitting.  The shoulder 86 and front legs 87 lie outside the slings 27 and stirrups 22 at one side of the shuttle 25 and the hind legs 88 and hams 89 lie outside the slings 27 and stirrups 22 on the other side of the shuttle 25.

The dimensions of the front feet 90 and hocks 91, and of the rear feet 92 and hocks 93 are determined at station II by the system. Dependent on software control, the front feet 90 and the rear feet 92 are cut off by the tools 36 and 37 respectively which are meat and bone saws. Then the tools 36 and 37 make a second cut-off of the front hocks or picnics 91 and the rear hocks 93. If it is desired to cut off the feet and hocks together, the tools 36 and 37 make a single cut at the hocks 91 and 93 leaving the feet 90 and 92 attached to the hocks 91 and 93 respectively.

When the shuttle 25 moves the remainder of the carcasses 84 and 85 from station II to station III they pass by saw tool 38 which cuts off the shoulder 86.

Upon arriving at station III the hams 89 are cut off by saw tool 39 after dimensions, contours and shape of the hams have been determined at station III by the system.

## VIDEO PROCESSING

The Video Processing or input control 50 section performs several preprocessing functions involving high-speed pixel based data steering, formating, thresholding, multiplexing and storage. Each camera 33, 34 and 35 is individually serviced at a rate determined by product flow or object movement. Incoming 8-bit digitized video from each camera head is thresholded into a 1-bit binary black and white signal for further processing. The threshold levels can be set dynamically on a frame-to-frame basis, for each camera source under software control. Gray scale digitized video is used for system setup, and analog camera video can be presented on a conventional closed circuit T.V. monitor, not shown.

The Image Plane Memory (IPM) is a 256x256x8-bit dynamic random access memory. Normally, it is partitioned into four (4) 256x256x2-bit "pages". The first bit in each page is used to store thresholded camera scene data, whilethe second bit is used for computer-generated overlay data such as graphics or alpha-numerics.

The IPM 50 acts as a data rate converter, allowing access by the Image Data Processing function 60 or the CPU 71 to occur at rates other than camera video rates.

The controlling of multi-source picture taking, the routing of scenes into and out of the IPM 50 and keeping track of pictures to be processed is performed by the micro-processor located within the image control and display function 53.

IMAGE PROCESSING

The Image Data Processing section 60 transforms the video-pixel data base into a high level, object macro-feature data base.

Thresholded camera scene, stored in the IPM 50 is scanned to locate edges, contours and boundaries of transition between black and white data and corner points where the direction of an edge changes. The stored data is then automatically processed into individual item files. The feature extractor 63 analyzes these item files and extracts key atomic features or the macro-characteristics of each item. Atomic features include area centroid location, rectilinear bounding box or dimensions, and parts, shapes and contours.

As a function of the application program, the CPU 71 will request the feature extractor to perform additional, extended feature extraction tasks such as the computation of caliper or ruler distance between points, intersections of a line with an item part, perimeter of an item, maximum radius of an item, etc..

The micro-processor 70 utilizes these "extended feature" results, along with the atomics in the data base, to perform the decision processing within the application program.

DECISION PROCESSING

Final decision processing is accomplished by the primary CPU 71 with associated memory modules 72. Decision processing is performed by the execution of user application programs which are stored in a 16K or 32K byte core memory plane 72 to ensure non-volatility. User input can be keyboard terminal 54, cassette tape 81 PROM/core 72 interchange or a host computer. Outputs include simple go-no-go indication, accurate dimensional, shape and contour measurement data, various control signals, and data logging.

While the disclosed and described method and apparatus, singly and in combination, ilustrate the invention, it will be understood that other embodiments may lie within the scope of the appended claims which define the protection of the invention.

0093496

The embodiments of the invention in which an exclusive property or privilege is claimed are defined as follows:

1. The method of processing irregular class objects of varying dimensions, angulation, shape, contour and extension of parts from one another, comprising:

establishing a reference point on each object which is common to all objects and from which the objects vary,

establishing a key point in the processing means common to all operations,

loading each object with its reference point relative to said key point so that the objects vary relative to said key point,

video scanning each object producing an object image,

processing said image to produce data indicative of each object's variations relative to said key point,

processing said data to encode identifications of shape, contours, points, dimensions, angulations and extensions relative to said key point,

processing said encoded identifications to signals indicative of motion, angulation and distance,

positioning a tool relative to the object for operating thereon,

moving and controlling said tool with a servo mechanism, and

feeding said signals to said servo mechanism moving and controlling said tool operating on each said object,

0093496

whereby said tool performs an operation on each object at a desired location on each object irrespective of objects of the class variations from one another.

2. In a method as set forth in Claim 1, loading the objects at a first station and registering their reference point with said key point,

moving the objects to a second station with said reference and key point registered in the second station,

positioning a tool at said second station relative to the object,

moving and controlling said tool with a servo mechanism, and,

video scanning, image processing, data processing, encoding, and signalling said servo mechanism at said second station to control and move said tool relative to the object at the second station.

3. In a method as set forth in Claim 2, third and other stations downstream from said second station to which said objects are successively and seqentially moved with said reference and key points registered at said third and downstream stations,

positioning a tool at said third and other stations relative to an object at said stations,

moving and controlling each said tool with a servo-mechanism, and

video scanning, image processing, data processing, encoding and signalling said servo mechanisms at said third and other stations to control and move said tools relative to the object at said third and other stations.

4. Apparatus for moving objects sequentially and successively between stations of a production line comprising,

a frame;

at least one loading station and two work stations at said frame,

a vertically movable platen within said frame below said stations,

a longitudinally movable shuttle on said platen,

at least one loading station and one transfer station on said shuttle corresponding with said frame stations,

power means for raising and lowering said platen with said shuttle thereon relative to said frame,

shift means for moving said shuttle on said platen to locate said shuttle stations between a home position at loading and first work station of said frame and a shunt position at said two work stations of said frame,

relatively low object positioning means on said frame at said second and third stations,

relatively high object holding means at said stations on said shuttle corresponding to said positioning means on said frame enabling said shuttle holding means to rais objects off and above said frame positioning means,

said positioning means on said frame and said holding means on said shuttle being out of registration to avoid interference during relative longitudinal movement,

said shuttle having a home position with its said stations lying at said frame loading and first work station and a shunt position with its said stations lying at said frame first and second work stations,

raising said shuttle via said power means at its home position elevating objects at said frame loading stations and lifting objects off said frame holding means at said frame first work station above said frame holding means to avoid interference between holding means and positioning means and objects thereon,

shunt movement of said shuttle in its elevated position moves objects on said shuttle holding means over frame positioning means at said frame work stations,

lowering of said shuttle in its shunt position drops said shuttle and holding means below said frame positioning means depositing the objects off said shuttle holding means on to said frame positioning means at said frame work stations with said shuttle and holding means dropping below interference with said frame positioning means and any objects thereon, and,

reverse movement of said shuttle in its lowered shunt position by said power means retracts said shuttle to its home position for reloading and recycling.

5.    In an apparatus as set forth in Claim 4,

17

said frame having additional work stations and object positioning means downstream from said third work station on said frame, and

additional transfer stations and holding means on said shuttle for servicing said additional work stations and positioning means on said frame.

6.  In an apparatus as set forth in Claim 4,

tools at said downstream stations for performing work on the objects on said frame postioning means.

7.  In an apparatus as set forth in Claim 6, servo mechanisms at said downstream stations for moving and operating said tools, and,

means for video scanning, image processing, data processing, encoding and signalling said servo mechanisms at said downstream stations to control and move said tools relative to objects at said downstream stations.

8.  In an apparatus as set forth in Claim 7, headless split hog carcasses as objects,

said control at said first work station having a camera producing an image of the front leg including identifying foot and picnic portions, and a second camera producing an image of the hind leg including identifying foot and hock portions,

said tools being a meat and bone saw adjacent said front legs and a meat and bone saw adjacent said hind legs,

a said servo mechanism for positioning, moving and operating each said saw,

said control processing said images and signalling said servo mechanisms to move said saws to sever the front legs in toto with one cut and/or sever the feet and picnics with two cuts and to move said othe saw to sever said hind legs in one cut and/or to sever the feet and hocks with two cuts,

all cuts being made at the identified junctures produced by the camera images.

9.    In an apparatus as set forth in Claim 8, said control at said second work station having a camera producing an image of the hams including identifying the contours of the hind quarters at which to sever the hams,

said tool being a meat and bone saw adjacent said hind quarter,

a said servo mechanism for positioning and moving and operating said saw,

said control processing said images and signalling said servo mechanisms to move said saw to-sever said hams at a point in the hind quarter at and above the hams.

10.  Apparatus for moving objects sequentially and successively between stations of a production line comprising,

a frame,

at least one loading station and two work stations at said frame,

a vertically movable platen within said frame below said stations,

a longitudinally movable shuttle on said platen,

at least one loading station and one transfer station on said shuttle corresponding with said frame stations,

power means for raising and lowering said platen with said shuttle thereon relative to said frame,

shift means for moving said shuttle on said platen to locate said shuttle stations between a home position at said loading and first work station of said frame and a shunt position at said two work stations of said frame,

relatively low object positioning means on said frame at said second and third stations,

relatively high object holding means at said stations on said shuttle corresponding to said positioning means on said frame enabling said shuttle holding means to raise objects off and above said frame positioning means,

said positioning means on said frame and said holding means on said shuttle being out of longitudinal registration to avoid interference during relative longitudinal movement,

said shuttle having a home position with its said stations lying at said frame loading and first work stations and a shunt position with its said stations lying at said frame first and second work stations,

raising said shuttle via said power means at its home position elevating objects at said frame loading stations and lifting objects off said frame holding means at said frame first work station above said frame holding means to avoid interference between holding means and positioning means and objects thereon,

20

shunt movement of said shuttle in its elevated position moves objects on said shuttle holding means over said frame positioning means at said frame work stations,

lowering of said shuttle in its shunt position drops said shuttle and holding means below said frame positioning means depositing the objects off said shuttle holding means on to said frame positioning means at said frame work stations with said shuttle and holding means dropping below interference with said frame positioning means and any objects thereon,

reverse movement of said shuttle in its lowered shunt position by said power means retracts said shuttle to its home position for reloading and recycling,

means for processing irregular class objects of varying dimensions, angulation, shape, contour and extension of parts from one another on said apparatus, including,

means establishing a reference point on each object which is common to all objects and from which the objects vary,

means establishing a key point in said apparatus common to all operations,

means for loading each object with its reference point relative to said key point so that the objects vary relative to said key point,

means video scanning each object producing an object image,

means processing said image to produce data indicative of each object's variations relative to said key point,

means processing said data to encode identification of shape, contour, points, dimensions, angulations and extensions relative to said key point,

means processing said encoded identifications to signals indicative of motion, angulation and distance,

tools at said work stations,

means positioning said tools relative to said objects for working thereon,

servo mechanisms at said work stations including means for positioning said tools relative to the objects and operating thereon, and

means feeding said signals to said servo mechanisms for moving and controlling each said tool relative to the objects,

whereby said tools perform work on each object at a desired location on each object irrespective of the objects of the class varying from one another, and

whereby said apparatus moves the objects to said stations and positions said reference point of each said object relative to said apparatus key point at said stations properly locating the objects relative to each said tool.

Fig-1

_Fig-2_

| | | |
|---|---|---|
| SERVO | SERVO | SERVO |
| REAR LEG CUT-OFF AT FOOT AND/OR HOCK ANGULAR AND RADIAL COMBINED MOTION VIDEO, IMAGE AND COMPUTER CONTROLLED | FRONT LEG CUT-OFF AT FOOT AND/OR HOCK ANGULAR AND RADIAL COMBINED MOTION VIDEO, IMAGE AND COMPUTER CONTROLLED | HAM CUT-OFF ANGULAR AND RADIAL COMBINED MOTION VIDEO, IMAGE AND COMPUTER CONTROLLED |

LAMP — 30
CAMERA B — 34
CAMERA A — 33
CAMERA — 35
SHOULDER SAW — 38
FRONT LEG SAW
HAM SAW — 39

0093496

2/6

_Fig-3_

VIDEO PROCESSING 50

IMAGE PROCESSING 60

CII — CAMERA IMAGE INTERFACE 51

IPM — IMAGE PLANE MEMORY 52

CPE — CORNER POINT ENCODER 61

FIFO — FIRST IN FIRST OUT MEMORY 62

FES — FEATURE EXTRACTOR SORTER 63

ICD — IMAGE CONTROL AND DISPLAY 53

FEATURE MEMORY 64

CID CAMERAS 1 2 3 — 33 34 35

MONITOR 29

STORAGE AND PART IN POSITION

MULTI BUS 55

SYSTEM UNDER CONTROL 28

CASSETTE TAPE RECORDER 81

ROM SYSTEM EXECUTION SOFTWARE 73

CORE MEMORY 72

USER PROGRAM (VPL)

SERIAL

PARALLEL

INPUT/OUTPUT 80

CPU 71

KEYBOARD DISPLAY TERMINAL 54

70

3/6

0093496

_Fig-4_

_Fig-5_

_Fig-6_

_Fig-7_

_Fig-8_

_Fig-9_

_Fig-10_

_Fig-11_

_Fig-12_

European Patent Office

# EUROPEAN SEARCH REPORT

EP 83 30 1553

## DOCUMENTS CONSIDERED TO BE RELEVANT

| Category | Citation of document with indication, where appropriate, of relevant passages | Relevant to claim- | CLASSIFICATION OF THE APPLICATION (Int. Cl. ³) |
|---|---|---|---|
| Y | US-A-4 208 675 (A.N.V.A.R.) <br> * Abstract; page 1 - page 3, line 22; figure 1 * | 1-3 | G 05 B 19/417 |
| Y | US-A-3 744 032 (UNIMATION) <br> * Abstract; figures 1,3 * | 1-3 | |
| A | US-A-4 253 111 (GCA CORP.) | 1-3 | |
| E,X | GB-A-2 110 427 (TOKICO) <br> * Whole document * | 1-3 | |
| | ----- | | |

| | | TECHNICAL FIELDS SEARCHED (Int. Cl. ³) |
|---|---|---|
| | | G 05 B 19/00 <br> G 06 F 15/00 |

The present search report has been drawn up for all claims

| Place of search | Date of completion of the search | Examiner |
|---|---|---|
| THE HAGUE | 30-08-1983 | RESSENAAR J.P. |